# EUROPEAN PATENT SPECIFICATION

(11) **EP 0 399 747 B1**
(45) Date of publication and mention of the grant of the patent: **19.07.1995**
(21) Application number: 90305461.7
(22) Date of filing: 21.05.1990
(51) Int. Cl.: G11B 5/64, G11B 5/704

(54) **Substrate used for magnetic disk and magnetic recording medium using the substrate**
Substrat für eine Magnetplatte und ein magnetischer Aufzeichnungsträger, der dieses Substrat verwendet
Substrat utilisé pour un disque magnétique et milieu d'enregistrement utilisant ce substrat

(30) Priority: 22.05.1989 JP 128339/89; 27.04.1990 JP 113744/90
(43) Date of publication of application: 28.11.1990
(73) Proprietor: NIPPON SHEET GLASS CO., LTD., Chuo-ku Osaka (JP)
(72) Inventor: Kogure, Toshihiro, c/o Nippon Sheet Glass Co. Ltd., Chuo-ku Osaka (JP); Shimizu, Tomoyasu, c/o Nippon Sheet Glass Co. Ltd., Chuo-ku Osaka (JP); Katayama, Shinya, c/o Nippon Sheet Glass Co.Ltd., Chuo-ku Osaka (JP); Sato, Toshiyuki c/o Nippon Sheet Glass Co.Ltd., Osaka (JP)
(74) Representative: Jackson, David Spence

(56) References cited:
- EP-A- 0 079 391
- EP-A- 0 153 853
- GB-A- 2 096 647
- PATENT ABSTRACTS OF JAPAN, vol. 12, no. 429 (P-785), 14th November 1988;& JP-A-63 160 014 (ASAHI GLASS CO.) 02-07-1988
- Patent Abstracts of Japan, vol. 012-136 (P649), 26.04.88 & JP-A-62 256215

## Description

The present invention relates to a magnetic disk having a glass substrate, a metallic island structure disposed on a surface of the glass substrate, and a magnetic film disposed over the metallic island structure.

### Description of the Prior Art

Generally, glass is used as a substrate for a high density magnetic disk since glass has excellent surface smoothness, high hardness, and great deformation resistance, less surface defects, etc. (refer, for example, to Japanese Patent Laid Open Sho 49-122707 and Sho 52-18002).

It is known to physically and/or chemically etch the surface of a glass substrate to form unevenness (or pits), in order to improve the characteristics (such as CSS property and, head static property) of contact between a magnetic disk and a magnetic head (for example, Japanese Patent Laid Open Sho 63-160010).

It is also known to form pits on the surface of a glass substrate by spraying on minute droplets of a solution of an organic metal compound, again to improve the contact characteristics (for example, in Japanese Patent Laid Open Sho 63-160014).

Further, it is also known to provide a pit forming layer of Al on a glass substrate in order to improve the contact characteristics (Japanese Patent Laid Open Sho 62-256215. See also Patent Abstracts of Japan, vol. 012-136 (P649), published on 26.4.88).

When a magnetic disk is prepared by using a glass substrate formed with surface pits as described above, the expected magnetic characteristics can not be attained, although the contact characteristic can be improved.

In addition, the known methods of forming the pits on the surface are complicated, or the method of etching the surface reduces the strength of the glass substrate or degrades the smoothness.

The method of using an organic metal compound has the merit of not reducing the strength or degrading the smoothness of the substrate since etching does not occur, but a magnetic layer formed on the substrate often has a portion in which the performance is reduced, and only a magnetic disk of low magnetic characteristic can be obtained.

Pits provided by a layer of Al are formed because of the large cohesion energy of deposited metal at the surface of the substrate at a high temperature. However, since the cohesion energy between the atoms of the deposited metal is greater than the interaction between the substrate and the deposited metal, the adhesion between the deposited metal and the substrate is not generally strong. Therefore, when Al is formed as a continuous layer on the glass substrate, deterioration occurs at the Al/glass boundary due to the intense frictional force caused upon CSS test. This is a problem which has to be solved before the usual problem of frictional coefficient due to friction between the head and the disk upon CSS test can be considered and it is a serious problem because it concerns the reliability of the magnetic disk.

GB-A-2096647 describes a magnetic disk of the kind defined hereinbefore at the beginning in which the island structure is composed of a metal selected from the group consisting of bismuth, antimony, and thallium, and the magnetic film is formed directly on the island structure. When bismuth is used, the bismuth is evaporated onto the substrate with the substrate held at a temperature in the range from 130°C to the melting point of bismuth. The bismuth is stated to be deposited to provide a mean amount in the range from 1 microgram/cm² to 100 microgram/cm², corresponding to a mean thickness in the range from 1 nm to 100 nm. Cobalt is used as the magnetic film material, and the magnetic film has a thickness in the range from 10 nm to 100 nm. It is stated that the bismuth and cobalt combination can provide a coercive force in the range from 39790 A/m to 79580 A/m and a rectangular ratio in the range from 0.60 to 0.65.

It is an object of the present invention to overcome the foregoing problems and provide a magnetic disk of excellent magnetic characteristics and with high productivity.

According to the present invention a magnetic disk of the kind defined hereinbefore at the beginning is characterised in that an oxygen trap layer of titanium is so disposed over the metallic island structure as to adhere to exposed areas of the said surface of the glass substrate between the islands of the island structure, a magnetic film underlying layer is provided between the oxygen trap layer and the magnetic film, and a protection layer is provided over the magnetic film, and in that the island structure has a covering rate on the said surface of 10 to 85%, is composed of a metal selected from the group consisting of Ag, Al, Cu, and Au, or an alloy of two or more of the metals of the said group, the depth of the island structure is in the range from 5 nm to 150 nm, and the average roughness of the island structure on the said surface is in the range from 2 nm to 8 nm, such that pits are formed at the exposed surface of the protection layer.

Preferably a glass plate is used as the non-magnetic substrate in view of the flatness of the surface. Glass plates of soda lime composition manufactured by a floating method are particularly preferred since they can be provided most inexpensively.

A metal selected from the group consisting of Ag, Al, Cu, and Au or an alloy comprising two or more of them has a melting point of lower than 1100°C. They easily form an island structure with large cohesion energy between metal atoms when deposited.

Low melting metal can be coated in an island shape having an irregular pits by means, for example, of a physical vapor deposition process such as vacuum vapor deposition or vacuum sputtering in the initial stage of vapor depositing the metal such that the deposited metal can be coagulated on a non-magnetic support while elevating the temperature of the non-magnetic support to a relatively high temperature.

The pit shape can be varied by controlling the temperature of the substrate and the amount of vapor deposition. Usually, the substrate is heated to a temperature from 100 to 400°C to form a pit film having the island structure. As the temperature of the substrate is increased, the depth of pit is increased. The pitch of the pits is decreased as the vapor deposition amount is increased.

The covering rate of the island structure on the substrate is from 10 to 85%, because adhesion between the substrate and the magnetic film is reduced if it is more than 85%, whereas the desired pits are difficult to obtain if it is less than 10%. Further, the average roughness of the pits in the island structure on the substrate is from 2 to 8 nm and, more preferably, 2 to 6 nm in order to suppress bit shift. Further, the depth of the island structure (depth of pit) is usually from 5 to 150 nm, and preferably, from 10 to 50 nm so that the maximum roughness does not exceed 150 nm, and so that pits are formed at the protection film, which is the uppermost layer. Further, the pitch of the pits is usually from 0.05 to 1 »m and, preferably, from 0.1 to 0.5 »m for providing the surface pits at the uppermost layer and making the running of the head smooth.

The magnetic film underlying layer is provided for improving the crystallinity of the magnetic film. In a case where CoNi series material is used for the magnetic film, Cr or an alloy mainly comprising Cr is usually used for the underlying layer.

The underlying layer can greatly improve the magnetic characteristics. The oxygen trap layer disposed below the underlying layer can further improve the magnetic characteristics.

As the oxygen trap layer Ti provides good adhesion with the glass substrate and effective oxygen trapping.

The oxygen trap layer prevents uprise of oxygen from the glass substrate, and improves the crystallinity of the magnetic film underlying layer, thereby improving the magnetic characteristics as well.

Scattering in the magnetic characteristics of a magnetic disk using a magnetic disk substrate prepared by using the organic metal compound described above is caused by oxygen or oxygen-containing gas originating from the organic metal compound, which partially reduces the crystallinity of the underlying layer thereby causing scattering in the magnetic characteristics.

Further, since the substrate is not etched, there is no risk of reduction of its strength or degrading of its smoothness. Further, since the island structure can be formed by a physical vapor deposition process (in particular, sputtering), good productivity can be obtained by adding the vapor deposition process as a pre-stage for a succession of vapor deposition steps for forming the magnetic film underlying layer and the magnetic film. Since the treatment can be conducted by a series of vapor deposition steps, various problems involved in transfer, cleaning, etc. between the steps can be overcome and production steps and yield can be improved outstandingly.

Furthermore, since the island structure is discontinuous on the surface of the substrate, the surface of the substrate is not covered entirely but partially left exposed. The layer formed on the island structure (oxygen trap layer) is made of a metal (titanium) having strong adhesion with the substrate, and the exposed portion at the surface of the substrate is in direct contact with the strongly adhesive metal. Accordingly, if the island structure is made of metal having weak adhesion with the substrate, the oxygen trap layer is bonded firmly and no deterioration occurs.

The invention will now be described by way of example with reference to the accompanying drawings, in which:-
Fig. 1 is a view schematically illustrating the state of pits on the surface of a metal pitting film manufactured in Example 1, as an electron microscopic photograph.
Fig. 2 is a cross sectional view showing the outline of a magnetic disk manufactured in the example;
Fig. 3 is a view schematically illustrating the state of pits on the surface of metal pitting film manufactured in Example 2, as an electron microscopic photograph,
Fig. 4 is a view illustrating the result of CSS test for the disk manufactured in Example 2, and
Fig. 5 is a graph illustrating a relationship between the surface roughness of a disk and bit shift in the disk manufactured in Example 3.

### DETAILED DESCRIPTION OF PREFERRED EMBODIMENTS

### Example 1

A soda lime glass substrate cleaned sufficiently (fabricated into a disk and chemically reinforced) was heated to 200°C in vacuum and an Ag film was formed by a DC magnetron sputtering method by using an Ar gas. Film was formed under the conditions of forming an Ag film of about 25 nm thickness as converted from the conditions for usually forming an Ag film of 100 to 200 nm thickness.

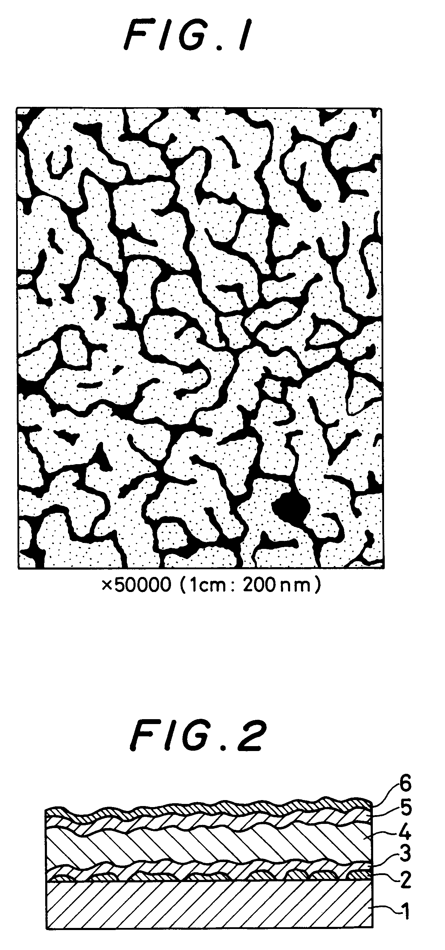

When the thus prepared Ag film was observed by using an electron microscope, an island structure was revealed as shown in Fig 1, in which ridges each with a height of about 25 nm and a lateral width of about 100 nm were irregularly distributed. The covering rate with the Ag film was 84%. The islands of Ag are white in Fig. 1.

After coating the magnetic disk substrate 1 manufactured by the method as described above with a Ti film 3 to about 40 nm thickness by a DC magnetron sputtering method also using an Ar gas and, heating the substrate to 200°C, a Cr film 4, a Co_{0.70} Ni_{0.30} film 5 and a protection film 6 made of carbon were successively coated each at a thickness of 150 nm, 60 nm and 30 nm respectively.

The steps from the coverage with the Ti film 3 to the coverage with the protection film 6 made of carbon were conducted without break the vacuum state in an in-lane type sputtering device.

When the coercive force of the thus prepared magnetic disk was measured, it was about 1500 Oe. In addition, when CSS test (contact-start-stop test) was conducted after coating a lubricant on the magnetic disk, the frictional coefficient was less than 0.2 even after 30000 cycles of CSS.

In this embodiment, the Ti film 3 was disposed as an oxygen trap metal layer below the Cr underlying film 4 for providing an effect of preventing the evolution of gases from the substrate, improving the crystallinity of the Cr film and improving the magnetic characteristics. In fact, the coercive force of the magnetic disk prepared in the same procedures as those in Example 1 but without disposing the Ti film was as low as 1300 Oe and the half-value with for the diffraction intensity at (110) phase of the Cr film determined by X-ray diffractiometry was broader than that of the Cr film disposed on the Ti film 3.

In this example, covering with the Ag film was conducted separately from the covering step of the magnetic film in order to confirm the covering state of the Ag film, but the Ag film can also be coated as the pre-stage for the magnetic film covering.

Further, although DC magnetron sputtering was used in this example for the vapor deposition of the low melting metal, the vapor deposition process is not restricted to the DC magnetron sputtering but RF sputtering or vacuum vapor deposition process, etc. may also be used.

### Example 2

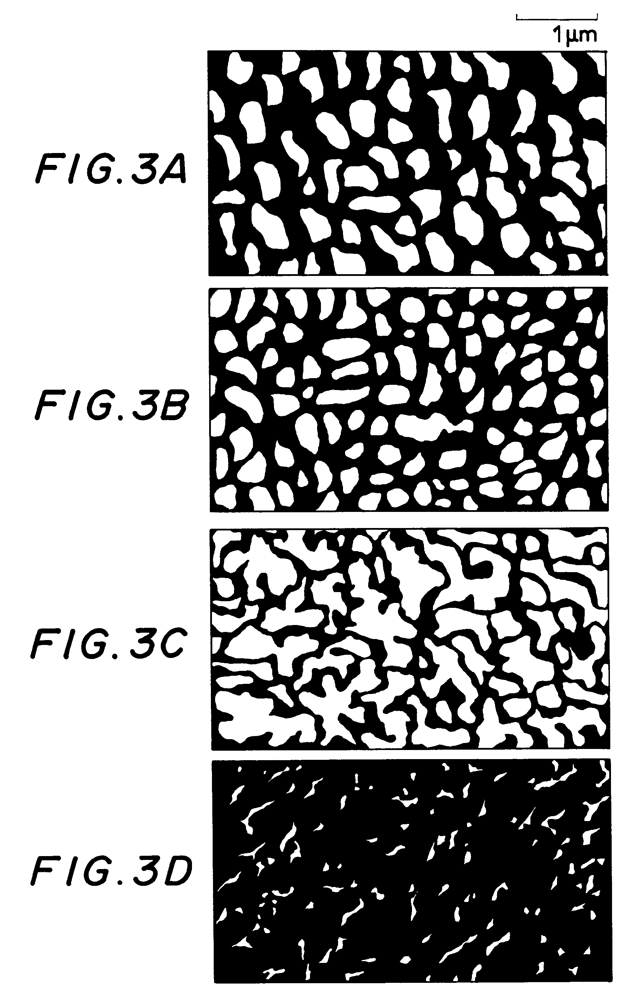

After cleaning a soda lime glass substrate (fabricated into a disk and chemically reinforced), it was heated to 260°C in vacuum and then Al was deposited by a DC magnetron sputtering by using an Ar gas. When the surface roughness of Al was measured by a contact probe (model AY-31, manufactured by Kosaka Kenkyusho), the mean roughness Ra was 6 nm and the maximum roughness was 60 nm. Fig. 3(a) shows the shape of pits. The Al islands are white in Fig. 3(a).

Since Al was in the island structure, the surface of the substrate was partially exposed. The Al covering rate was about 57%. The Al covering rate was obtained by drawing orthogonal lines on a photograph taken by an electron microscope, accumulating all of the values for the length of Al particles crossing each of the orthogonal lines and calculating a mean value by dividing them with the length for each of the orthogonal lines.

After coating the magnetic disk substrate 1 manufactured by the method described above with a Ti film 3 to about 40nm thickness by a DC magnetron sputtering using Ar gas and heating the substrate to 200°C, a Cr film 4, Co_{0.70}Ni_{0.30} film 5 and a thin C film 6 were coated successively each at 150nm, 60nm and 30 nm thickness respectively.

In this case, steps from the covering with the Ti film 3 to the covering with the protection film 6 made of carbon were continuously conducted without breaking the vacuum state in an in-line type sputtering apparatus.

In addition, substrates used for magnetic disks with different Al covering rates of 70%, 80% and 93% were prepared respectively. Figs. 3(b) - (d) show the island structure (white in Figs. 3(b) and 3(c), black in Fig. 3(d)) of the respective substrates. The average roughness Ra were 5.4 nm, 5.2 nm and 4.9 nm respectively.

Ti film, Cr underlying film, Co-Ni-Or alloy film and carbon protection film were coated on such substrates under the same film-forming condition.

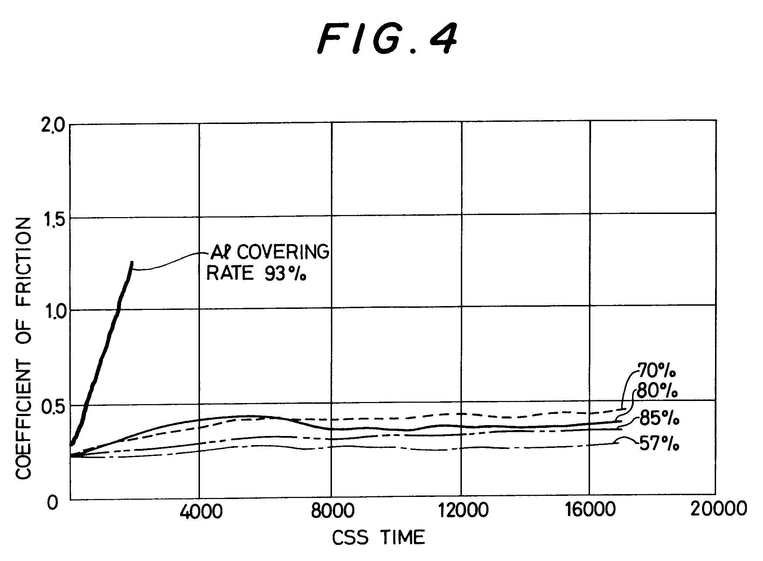

After coating a perfluoroalkyl polyether (trade name: Fomblim Am 2001, lubricant) on the thus prepared magnetic disks of different Al covering rates, CSS test was conducted. The results are shown together with samples obtained in Example 1 in Fig. 4.

In this figure, a disk having an Al covering rate to 93%, i.e., having a film structure substantially equal to a continuous film caused defoliation at 2000 cycle of CSS and measurement of the frictional coefficient » was no longer possible. Further, a disk with the Al covering rate of less than 84% was satisfactory with the frictional coefficient of less than 0.5 even after CSS test for 16000 cycles. Further, when the Al covering rate was reduced to less than 10%, adsorption between the head and the disk occurred since the average roughness of pits formed by Al particles was less than 2 nm.

### Example 3

An Al film was formed on a glass substrate in the same procedures as those in Example 2. In this case, 9 sheets of substrates having average roughness (Ra) from 1 to 7 nm were prepared while varying the substrate temperature for changing the pits formed with the Al film.

On the substrates, Ti film, Cr film, Co-Ni-Cr alloy film and protection film made of carbon were formed under the same covering conditions as those in Example 2. The coersive force for each of the disks was within a range of 1470 ± 50 (Oe).

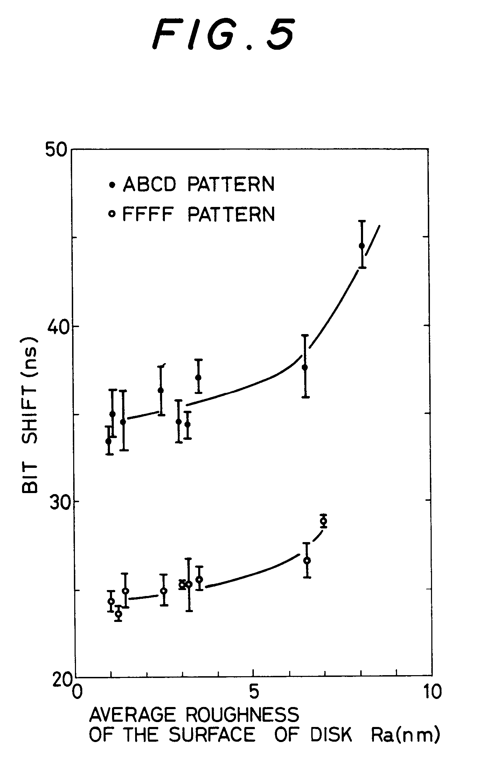

After coating a perfluoroalkyl ether on the disks, bit shift was measured by a thin film head (model 3370, taper flat slider) using a disk evaluation machine (GuziKi RWA, 201 B). The amount of bit shift was measured by writing ABCD and FFFF patterns in a hexadecimal expression. Fig. 5 shows a relationship between the average roughness Ra and the amount of bit shift for each of the disk. From the figure, it can be seen that the amount of bit shift is increased suddenly if the surface roughness of the disk exceeds average roughness Ra of 8 nm. Since reading errors for the recorded signals are caused if the amount of bit shift is increased, it causes a problem in view of the quality of the magnetic disk.

Accrodingly, in a case of a head flying height of about 75 nm, the surface pits of the disk in average roughness Ra is, preferably, from 2 to 5 nm.

### Comparative Example

A magnetic disk was prepared in the same procedures as in Example 2 except for reducing the covering speed upon conducting Al covering and forming a pit forming layer comprising a continuous layer with an average roughness of 5.3 nm and a thickness of 70 nm on a glass substrate. The covering rate of the pit-forming material on the magnetic disk was 100%, and when a CSS test was conducted, deterioration occurred at the interface between the Al and the glass substrate at 1000 rotation.

As has been described above specifically, in the substrate used for a magnetic disk according to the present invention, no special fabrication method such as etching is required for the substrate and, since the surface of the substrate is not etched, there is no risk of reduction of the strength or degradation of the smoothness of the substrate.

Also, since material which does not evolve gas is used for the magnetic recording medium in the present invention, it has satisfactory magnetic characteristics and, since pitforming material having an island structure is used, high reliability with no deterioration is provided.

## Claims

1. A magnetic disk having a glass substrate (1), a metallic island structure (2) disposed on a surface of the glass substrate (1), and a magnetic film (5) disposed over the metallic island structure (2), characterised in that an oxygen trap layer (3) of titanium is so disposed over the metallic island structure (2) as to adhere to exposed areas of the said surface of the glass substrate (1) between the islands of the island structure (2), a magnetic film underlying layer (4) is provided between the oxygen trap layer (3) and the magnetic film (5), and a protection layer (6) is provided over the magnetic film (5), and in that the island structure (2) has a covering rate on the said surface of 10 to 85%, is composed of a metal selected from the group consisting of Ag, Al, Cu, and Au, or an alloy of two or more of the metals of the said group, the depth of the island structure (2) is in the range from 5 nm to 150 nm, and the average roughness of the island structure (2) on the said surface is in the range from 2 nm to 8 nm, such that pits are formed at the exposed surface of the protection layer (6).

2. A magnetic disk according to claim 1, characterised in that the island structure (2) is composed of Al, the protection layer (6) is of carbon, and the average roughness of the pits formed at the exposed surface of the protection layer (6) is in the range from 2 nm to 5 nm.

3. A magnetic disk according to claim 1 or 2, characterised in that the glass substrate (1) has a soda lime composition.

## Patentansprüche

1. Magnetplatte mit einem Glassubstrat (1), einer metallischen Inselstruktur (2) auf einer Oberfläche des Glassubstrats (1) und einem Magnetfilm (5) oberhalb der metallischen Inselstruktur (2),
**dadurch gekennzeichnet,** daß eine Sauerstoff-Einfangschicht (3) aus Titan so auf der metallischen Inselstruktur (2) aufgebracht ist, daß sie in Verbindung steht mit freiliegenden Bereichen der Oberfläche des Glassubstrats (1) zwischen den Inseln der Inselstruktur (2), eine Magnetfilm-Unterlagenschicht (4) zwischen der Sauerstoff-Einfangsschicht (3) und dem Magnetfilm (5) vorhanden ist, und eine Schutzschicht (6) auf dem Magnetfilm (5) liegt, und daß die Inselstruktur (2) eine Bedeckungsrate auf der Oberfläche von 10 bis 85 % aufweist, aus solchem Metall besteht, das aus der Ag, Al, Cu und Au enthaltenden Gruppe oder aus einer Legierung von zwei oder mehreren der Metalle dieser Gruppe ausgewählt ist, die Tiefe der Inselstruktur (2) im Bereich von 5 nm bis 150 nm und die mittlere Rauhigkeit der Inselstruktur (2) auf der Oberfläche im Bereich von 2 nm bis 8 nm liegen, so daß Vertiefungen auf der freiliegenden Oberfläche der Schutzschicht (6) gebildet werden.

2. Magnetplatte nach Anspruch 1, **dadurch gekennzeichnet**, daß die Inselstruktur (2) aus Al besteht, die Schutzschicht (6) aus Kohlenstoff, und die mittlere Rauhigkeit der Vertiefungen auf der freiliegenden Oberfläche der Schutzschicht (6) im Bereich von 2 nm bis 5 nm liegt.

3. Magnetplatte nach Anspruch 1 oder 2, **dadurch gekennzeichnet,** daß das Glassubstrat (1) eine Natronkalk-Zusammensetzung aufweist.

## Revendications

1. Disque magnétique ayant un support en verre (1), une structure d'îles métallique (2) disposée sur une surface du support en verre (1) et un film magnétique (5) disposé sur la structure d'îles métallique (2), caractérisé en ce qu'une couche de piège à oxygène (3) en titane est disposée par-dessus la structure d'îles métallique (2) de manière à adhérer aux zones exposées de ladite surface du support de verre (1) entre les îles de la structure d'îles (2), une sous-couche de film magnétique (4) est disposée entre la couche de piège à oxygène (3) et le film magnétique (5) et une couche protectrice (6) est disposée par-dessus le film magnétique (5) et en ce que la structure d'îles (2) possède un taux de couverture sur ladite surface de 10 à 85%, elle est composée d'un métal choisi parmi Ag, Al, Cu et Au ou d'un alliage de deux ou plusieurs desdits métaux, la profondeur de la structure d'îles (2) est dans l'intervalle de 5 à 150 nm et la rugosité moyenne de la structure d'îles (2) sur ladite surface est dans l'intervalle de 2 à 8 nm, de sorte que des creux sont formés sur la surface exposée de la couche protectrice (6).

2. Disque magnétique selon la revendication 1, caractérisé en ce que la structure d'îles (2) est composée de Al, la couche protectrice (6) est en carbone et la rugosité moyenne des creux formés sur la surface exposée de la couche protectrice (6) est dans l'intervalle de 2 à 5 nm.

3. Disque magnétique selon la revendication 1 ou 2, caractérisé en ce que le support en verre (1) est un verre à base de soude et de chaux.
